# EUROPÄISCHE PATENTSCHRIFT

(11) **EP 1 221 026 B1**
(45) Veröffentlichungstag und Bekanntmachung des Hinweises auf die Patenterteilung: **16.02.2011**
(21) Anmeldenummer: 00967873.1
(22) Anmeldetag: 15.10.2000
(51) Int. Cl.: G01F 23/284

(54) **VERFAHREN ZUR ERHÖHUNG DER STÖRFESTIGKEIT EINES ZEITBEREICHSREFLEKTOMETERS UND SCHALTUNGSANORDNUNG ZUR DURCHFÜHRUNG DES VERFAHRENS**
METHOD FOR INCREASING THE INTERFERENCE RESISTANCE OF A TIME FRAME REFLECTOMETER AND A CIRCUIT DEVICE FOR IMPLEMENTING SAID METHOD
PROCEDE PERMETTANT D'AUGMENTER LA RESISTANCE AUX INTERFERENCES D'UN REFLECTOMETRE TEMPOREL ET CIRCUIT PERMETTANT DE METTRE EN OEUVRE LEDIT PROCEDE

(30) Priorität: 15.10.1999 DE 19949992
(43) Veröffentlichungstag der Anmeldung: 10.07.2002
(73) Patentinhaber: Endress + Hauser GmbH + Co. KG, 79689 Maulburg (DE)
(72) Erfinder: CRAMER, Stefan, 68623 Lampertheim (DE); HERTEL, Markus, 68623 Lampertheim (DE); KRIEGER, Bernd, 68259 Mannheim (DE)
(74) Vertreter: Andres, Angelika Maria
(86) Internationale Anmeldenummer: PCT/EP2000/010137
(87) Internationale Veröffentlichungsnummer: WO 2001/029521

(56) Entgegenhaltungen:
- EP-A- 0 780 665
- EP-A- 0 875 772
- DE-A- 1 815 752
- DE-U- 29 815 069
- US-A- 5 563 605
- US-A- 5 609 059

## Beschreibung

### Technisches Gebiet:

Die Erfindung betrifft ein Verfahren zur Erhöhung der Störfestigkeit eines Zeitbereichsreflektometers, insbesondere gegenüber Hochfrequenzeinstrahlung, bei welchem mit einer Pulsrepetierfrequenz ein Sendepuls erzeugt und in eine Wellenleitung eingekoppelt wird, deren oberes Ende zum Prozeßanschluß an einem Halteteil angeordnet ist. Die Erfindung betrifft weiterhin eine Schaltungsanordnung zur Durchführung des Verfahrens.

### Stand der Technik:

Zur Bestimmung des Füllstandes von Medien in einem Behältnis sind Sensoren auf der Basis von Zeitbereichsreflektometrie (time domain reflectometry, TDR) bekannt. Eine Übersicht gibt US-A-5,609,059. Derartige Sensoren basieren auf der Laufzeitmessung elektromagnetischer Signale, die entlang eines offenen Wellenleiters, der in das Medium hineinragt, propagiert werden. Der Wellenleiter ist beispielsweise eine Sommerfeldleitung, eine Goubau-Leitung, ein Koaxialkabel, ein Mikrostreifen oder eine koaxiale oder parallele Anordnung von zwei Leitungen. Das Medium bewirkt an der Grenzfläche zum Außenmedium bzw. auch im Falle von Schichtbildung innerhalb des Mediums aufgrund der sprunghaften Änderung seiner dielektrischen Eigenschaften eine Diskontinuität in den Übertragungseigenschaften des eintauchenden Wellenleiters, so daß sich entlang bzw. innerhalb des Wellenleiters ausbreitende Pulse an diesen Stellen wenigstens teilweise reflektiert werden. Aus dem rückreflektierten Signal (Xsonde) kann somit die Distanz bzw. Höhe einer Grenzschicht bestimmt werden, indem der Zeitpunkt des Empfangs des rückreflektierten Pulses mit dem Zeitpunkt des Aussendens verglichen wird.

Im Betrieb eines TDR-Sensors wird mit jeder Periode eines Sende-Triggersignals XTS. welches die Pulsrepetierfrequenz fPRF aufweist, ein Sendepuls Xs erzeugt und ausgesendet; eine typische Pulsrepetierfrequenz liegt zwischen einigen 100 KHz bis zu einigen MHz. Das periodisch rückreflektierte Signal Xsonde wird einer Signalabtastschaltung zugeführt, um den zeitlich kurzen Vorgang zeitgedeht darstellbar und auswertbar zu machen. Diese wird mit dem Triggersignal XTA der Abtastfrequenz fA getriggert, wobei das periodische Signal Xsonde zu den Abtast-Triggerzeitpunkten abgetastet wird. Durch eine zeitproportionale Verzögerung des Abtast-Triggersignals gegenüber dem Sende-Triggersignal, beispielsweise durch eine etwas geringere Frequenz des Abtast-Triggersignals gegenüber dem Sende-Triggersignal, oder durch eine Phasenmodulation des Abtast-Triggersignals gegenüber dem Sende-Triggersignal erzeugt die Abtasteinrichtung ein Ausgangssignal, dessen Amplitudenverlauf durch die entsprechenden Augenblickswerte des Sondensignals gegeben ist. Das Ausgangssignal stellt somit ein zeitgedehntes Bild des Sondensignals Xsonde dar. Nach Filterung und Verstärkung bildet dieses Ausgangssignal bzw. ein zeitlicher Ausschnitt desselben das Reflexionsprofil Xvideo, aus welchem die Laufzeit des rückreflektierten Signals und damit der Abstand der Grenzschicht ermittelt werden kann.

Aus der DE-A-1815752 ist eine Abtast- oder Samplingschaltung bekannt, bei der der abzutastende Puls auf eine gesperrte Empfangsdiode gegeben wird, die durch den Abtastpuls öffnet. Des weiteren sind Sampling-Schaltungen auf der Basis von vier Dioden bekannt, die in einer Brückenschaltung miteinander gekoppelt sind.

Durch die DE 298 15 069 U1 ist ein TDR-Füllstandssensor bekannt geworden, welcher aus einem in ein Gut eintauchenden Wellenleiter besteht, an den eine Samplingschaltung angeschlossen ist, die einen Sendeimpulsgenerator zur Erzeugung eines gepulsten Hochfrequenzwellensignals, einen Empfänger zum Empfang des Hochfrequenzwellensignals, eine Sende-/Empfangstrennung zum Trennen des gesendeten und empfangenen Hochfrequenzwellensignals, einen Abtaster zum Abtasten des empfangenen Hochfrequenzwellensignals, einen Abtastpulsgenerator zur Steuerung des Abtasters und einen Zwischenspeicher zur temporären Speicherung des empfangenen Hochfrequenzwellensignals aufweist. Die Samplingschaltung besitzt zwei Quarzoszillatoren, von denen wenigstens einer in der Frequenz variierbar ist, deren einer den Sendegenerator und der andere den Abtastpulsgenerator steuert. Ein Frequenzmischer bildet aus den beiden Frequenzen die Differenz, welche zur Einstellung des Zeitdehnungsfaktors auf einen Sollwert wird. Nachteilig ist hier, dass Quarzoszillatoren nicht weit genug verstimmt werden können. Werden hingegen in einem größeren Bereich abstimmbare Oszillatoren, zum Beispiel unter Verwendung von LC-Schwingkreisen, verwendet, so weisen diese aufgrund des höheren Phasenrauschens einen schlechten Gleichlauf auf.

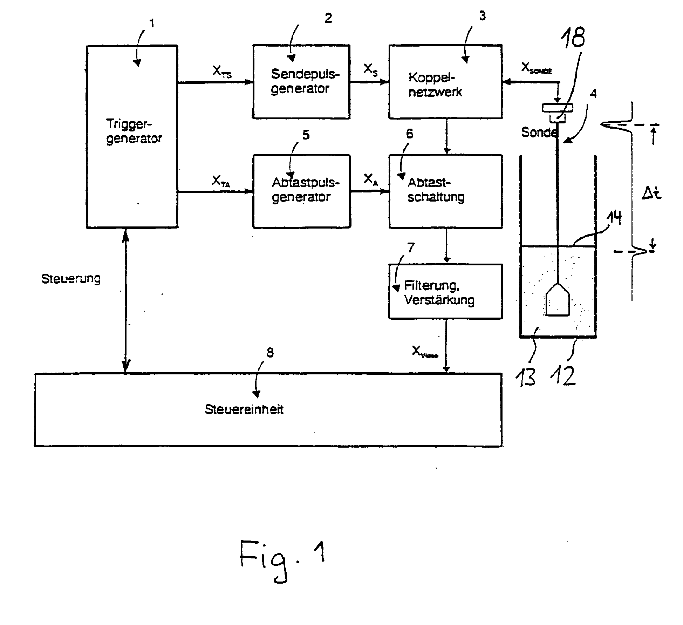

Problematisch bei derartigen Sensoren ist des Weiteren die hohe Störempfindlichkeit gegenüber hochfrequenten Störsignalen. Ein Störsignal, welches auf den Wellenleiter einkoppelt, überlagert sich dem rückreflektierten Signal Xsonde und wird ebenfalls von der breitbandigen Abtastschaltung erfaßt. Ein typisches schmalbandiges Störsignal wird bei Tests zur elektromagnetischen Verträglichkeit (EMV) durch eine Trägerschwingung mit einer Grundfrequenz fT.stör von 80 MHz bis 1 GHz mit einer niederfrequenten Amplitudenmodulation (z.B. 1 kHz) nachgebildet. Befindet sich die Trägerfrequenz fT.stör in der Nähe eines ganzzahligen Vielfachen der Abtastfrequenz fA, d.h. innerhalb eines sogen. "Frequenzempfangsfensters" n·fA±Δf, so kann diese Störung durch eine Tiefpaßfilterung nach der Abtasteinrichtung nicht unterdrückt werden; Δf entspricht dabei der Bandbreite des Tiefpasses (Bezugsziffer 7 in Figur 1), n ist eine ganze Zahl. Das Störsignal wird nach Art einer Bandpaßabtastung mit der Frequenz fA abgetastet. Damit ist dem Reflexionsprofil gegenüber dem ungestörten Fall eine Schwingung überlagert, welche dessen Auswertung erschwert und u.U. verfälscht.

Aufgrund des Meßprinzips mit einer breitbandigen Empfangsschaltung und einer Sonde, die als Stabantenne wirkt, ist der Einkoppelfaktor von Störungen sehr hoch. Damit ist das Nutzsignal bei einer Störung, die in einem Frequenzempfangsfenster liegt, in der Regel nicht mehr auswertbar.

Zur Verbesserung der Störsicherheit kann die Sendeimpulsamplitude erhöht werden, wodurch das Signal-Rausch-Verhältnis verbessert wird. Hierbei müssen die Pulsweite sowie die Anstiegs- und Abfallzeiten des Sendepulses konstant bleiben, um die Meßgenauigkeit nicht zu verschlechtern. Dieses kann mit einer einfachen Transistorschaltstufe nicht mehr erreicht werden. Eine Verbesserung ist nur durch andere Technologien, wie z.B. Speicherschaltdioden oder Avalanche-Transistoren möglich. Daraus ergeben sich jedoch Nachteile wie erhöhter Kostenaufwand, Verfügbarkeit von Bauelementen, erhöhter Leistungsbedarf des Sensors sowie erhöhte Störanfälligkeit.

Eine Verminderung des Störpegels kann des weiteren erreicht werden, indem der Sensoreinsatz auf metallische Tanks beschränkt wird, wodurch der Einkoppelfaktor verringert wird. Durch die Verwendung von koaxialen Sonden bzw. 2-Leiter-Sonden ist die Amplitude des Nutzsignals gegenüber einer Einzelleiter-Sonde, wie einer Sommerfeld- oder Goubau-Leitung, größer und die Störsignaleinkopplung reduziert. Nachteile dieser Sonden liegen jedoch in der verstärkten Anhaftung von Materialien an den Sonden.

### Technische Aufgabe:

Der Erfindung liegt die Aufgabe zugrunde, ein Verfahren zur Erhöhung der Störsicherheit von Zeitbereichsreflektometern anzugeben, mit welchem die Betriebsgenauigkeit bekannter Zeitbereichsreflektometer, insbesondere gegenüber hochfrequenten Störsignalen, auf einfache und kostengünstige Weise verbessert werden und das universell einsetzbar sein soll.

### Offenbarung der Erfindung und deren Vorteile:

Die Aufgabe wird gelöst durch das Verfahren zur Erhöhung der Störfestigkeit eines Zeitbereichsreflektometers, insbesondere gegenüber Hochfrequenzeinstrahlung, bei welchem mit einer Pulsrepetierfrequenz fprf ein Sendepuls Xs erzeugt und in eine Wellenleitung eingekoppelt wird, deren oberes Ende zum Prozeßanschluß an einem Halteteil angeordnet ist, wobei das von einem Reflektor, der mit der Wellenleitung in Kontakt steht, rückreflektierte und auf der Wellenleitung rücklaufende Signal Xsonde zur zeitgedehnten Darstellung als Reflexionsprofil mit Abtastpulsen XA, die mit einer Abtastfrequenz fA wiederholt werden, abgetastet wird und aus den Reflexionsprofilen laufend Meßwerte gewonnen werden, die die Distanz vom Reflektor zum Prozeßanschluß beinhalten, mit folgenden Merkmalen:
I) die Abtastfrequenz fA und die Pulsrepetierfrequenz fprf werden verändert, wobei entweder II.1) die zeitgedehnte Darstellung des Reflexionsprofils unverändert bleibt oder II.2) bei zeitlicher Veränderung des Reflexionsprofils die Änderung der Zeitdehnung bekannt ist und in der Auswertung des Reflexionsprofils berücksichtigt wird; III) aus wenigstens einer Messung des Reflexionsprofils bzw. eines Teils desselben wird ein Störmaß bestimmt; IV) zur Entscheidung über die Brauchbarkeit der Meßwerte bzw. eines einzelnen Meßwertes wird ein Algorithmus verwendet, der aus den Meßwerten bzw. aus einem einzigen Meßwert und dem Störmaß errechnet, ob das Reflexionsprofil so weit störungsfrei ist, dass eine ausreichende Meßgenauigkeit erreicht wird, wobei der Algorithmus aus den Schritten besteht: V) falls das Störmaß eine vorbestimmte Schwelle übertrifft, werden die Abtastfrequenz (fA) und die Pulsrepetierfrequenz (fprf) geändert; VI) erneute Bestimmung und Bewertung des Störmaßes; VII) die Schritte V) und VI) werden wiederholt, bis das Störmaß die vorbestimmte Schwelle unterschreitet.

Vorteilhafte Weiterbildungen des Verfahrens sind in den Unteransprüchen 2-8 gekennzeichnet.

In einer weiteren Ausgestaltung des Verfahrens erfolgt die Änderung der Abtastund der Pulsrepetierfrequenz anhand einer vorgegebenen Tabelle, welche geeignete Frequenzen beinhaltet, wobei der Zugriff auf die Tabelle linear oder zufällig ist. Oder zur Änderung der Abtast- und der Pulsrepetierfrequenz werden die Frequenzen aus einem Frequenzbereich ausgewählt.

Vorteilhaft kann die Pulsrepetierfrequenz fprf mittels eines spannungs- oder numerisch gesteuerten Oszillators, VCO oder NCO, verändert werden.

In einer weiteren Ausgestaltung des Verfahrens kann das Abtast-Triggersignal XTA mittels einer steuerbaren Verzögerungsschaltung aus dem Sende-Triggersignal XTS gewonnen und der Verzögerungsschaltung ein Referenzsignal Xs oder XTS mit der Pulsrepetierfrequenz fprf zugeführt werden, wobei die Verzögerungsschaltung ein Ausgangssignal XA bzw. XTA erzeugt, und wobei die Phase des Ausgangssignals XA, XTA durch eine vorgebbare Verzögerungs-Sollgröße, mit welcher die Verzögerungsschaltung gesteuert wird, bestimmt wird.

Somit werden erfindungsgemäß bei Vorliegen einer schmalbandigen Störung durch - gegebenenfalls iteratives - Verändern der Abtastfrequenz fA die durch n·fA±Δf mit n=0, 1, ... definierten Frequenzempfangsfenster so auf der Frequenzskala verschoben, daß die feste Störfrequenz fT,stör außerhalb der Fensterbereiche liegt. Dadurch wird das Störmaß reduziert, da dann das Störsignal nicht mehr bzw. nicht mehr wesentlich zum gemessenen Reflexionsprofil beiträgt.

In der Schaltungsanordnung ist die Abtasteinheit mit einer Großsignal-Vier-Dioden-Schaltung ausgestattet.

Das Störmaß kann gleichermaßen gewonnen werden und gegeben sein durch einen Vergleich des durch die Reflexion an der Grenzschicht entstandenen Pulses mit einem vorgegebenen Referenzimpuls. Dazu kann die Amplitude des Meßpulses normiert und ein Abweichungsmaß bestimmt werden, wobei eine maximal zulässige Abweichung vorgegeben wird, beispielsweise durch Vergleich der Pulsweiten oder durch Vergleich der unterschiedlichen Flächen.

In weiterer Ausgestaltung des Verfahrens kann das Störmaß gegeben sein durch die Differenz aus der maximalen und minimalen Abweichung des Reflexionsprofils von einem vorgegebenen Wert oder von dem Referenzprofil in einem vorbestimmten Zeit- oder Distanzfenster.

In weiterer Ausgestaltung des Verfahrens wird die Frequenz und/oder Phase der Abtastpulse (XA) bei Veränderung der Pulsrepetierfrequenz (fprf) derart angepaßt, daß die Differenz von Abtast- und Pulsrepetierfrequenz einen vorgegebenen Bereich nicht überschreitet oder konstant ist.

Eine Schaltungsanordnung zur Durchführung des Verfahrens weist einen Triggergenerator auf, der ein Sende-Triggersignal XTS mit einer variablen, durch ein Steuersignal veränderbaren Pulsrepetierfrequenz fprf und ein Abtast-Triggersignal XTA mit gegenüber dem Sende-Triggersignal XTS verschiedener Frequenz und/oder Phase erzeugt, wobei das Sende- bzw. Abtast-Triggersignal einen Sende- bzw. Abtastgenerator zur Erzeugung von Sende- bzw. Abtastpulsen veranlaßt, mit einer Abtasteinheit, welche die von der Wellenleitung rückgeleiteten Sendepulse XSonde zur zeitgedehnten Darstellung als Reflexionsprofil Xvideo abzutasten imstande ist, mit einer Filter- und Verstärkereinheit, welche die Störung unterdrückt und mit einer Steuereinheit, welche das Reflexionsprofil auszuwerten imstande ist und Steuersignale erzeugt, welche den Phasen- oder Frequenzunterschied der Triggersignale einstellen und mit welchen der Triggergenerator zur Änderung der Pulsrepetierfrequenz fprf veranlaßt wird.

Der Triggergenerator kann eine steuerbare Verzögerungsschaltung umfassen, die mit dem Ausgangssignal eines gesteuerten Oszillators CO, der zum Beispiel spannungs- oder numerisch gesteuert ist, VCO oder NCO, beaufschlagt ist und deren Ausgangssignal das Abtast-Triggersignal XTA darstellt zur Einstellung der Verzögerung des Abtast-Triggersignal XTA gegenüber dem Sende-Triggersignal XTS.

Dazu können zwei gesteuerte Oszillatoren, die zum Beispiel spannungs- oder numerisch gesteuert sein können, für das Sende-Triggersignal XTS und für das Abtast-Triggersignal XTA vorhanden sein. Der Frequenzunterschied Δf zwischen den Triggersignalen wird mit einem Regler auf einen vorgegebenen Wert eingestellt und konstant gehalten. Ebenso können die Oszillatoren als Oszillatorbank ausgeführt sein zur Verfügungstellung eines konstanten Frequenzunterschieds zwischen der Pulsrepetierfrequenz fprf und der Abtastfrequenz fA.

Besteht das Störsignal aus einer Überlagerung mehrerer schmalbandiger Signale, läßt sich mit dem erfindungsgemäßen Verfahren durch die Iteration eine Pulsrepetierfrequenz finden, die den Gesamteinfluß sämtlicher Störfrequenzen minimiert.

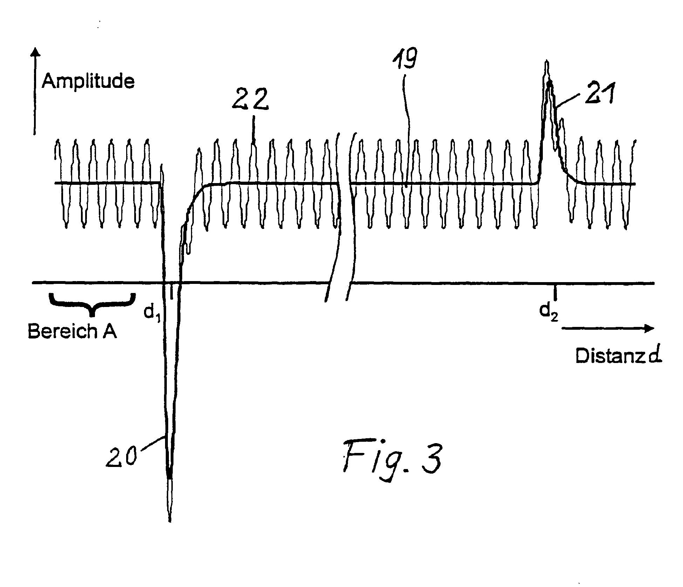

Das Störmaß ergibt sich aus den Abweichungen des gemessenen Reflexionsprofils zu einem zuvor unter störungsfreien Bedingungen bestimmten Referenzprofil. Als Störmaß kann zum Beispiel die Differenz aus maximaler und minimaler Abweichung des Reflexionsprofils von einem vorgegebenen Wert oder vom Referenzprofil in einem definierten Zeit- bzw. Distanzfenster, z.B. Start der Erfassung des Profils bis zum Beginn des Sendepulses, nämlich Bereich A in Figur 3, herangezogen werden. Die Schwelle, bei deren Überschreitung die Abtastfrequenz variiert wird, ergibt sich aus den zur Sicherung einer gegebenen Maßgenauigkeit noch tolerierbaren Abweichungen vom Referenzprofil.

Wurde nun erfindungsgemäß die Abtastfrequenz variiert, wird aus dem erneut bestimmten Störmaß ermittelt, ob die Variation der Abtastfrequenz in die richtige Richtung gegangen ist, d.h. zu einer Reduktion des Störmaßes gegenüber der ersten Messung geführt hat. Ist dies der Fall, kann die Anpassung der Abtastfrequenz mit derselben Tendenz, d.h. weitere Erhöhung bzw. weitere Erniedrigung, fortgesetzt werden, sofern nicht die Störschwelle bereits unterschritten ist. Falls keine Verbesserung des Störmaßes eingetreten ist, kann die Anpassung der Abtastfrequenz, ausgehend von der Ursprungs-Abtastfrequenz, in die andere Richtung als der erste Anpassungsversuch erfolgen. Jedoch führt auch ein Weitergehen in dieselbe Richtung wegen der endlichen Fensterbreite zum Erfolg. Die Bewertung und Anpassung der Abtastfrequenz kann beispielsweise durch einen Regelkreis vorgenommen werden.

Kurzbeschreibung der Zeichnung, in der zeigen:
- Figur 1: ein Blockschaltbild eines TDR-Füllstandssensors mit verbesserter Störsicherheit;
- Figur 2: die Frequenzumsetzung eines Störsignals durch die Abtastung;
- Figur 3: ein Referenz- und ein Reflexionsprofil mit überlagertem Stör- signal;
- Figur 4: eine Anordnung zur Variation der Pulsrepetierfrequenz und zur Generierung eines Abtast-Triggersignals;
- Figuren 5 und 6: zwei Anordnungen zur Realisierung einer gesteuerten Verzö- gerungsschaltung zur Generierung eines Abtast-Triggersignals.

### Wege zur Ausführung der Erfindung:

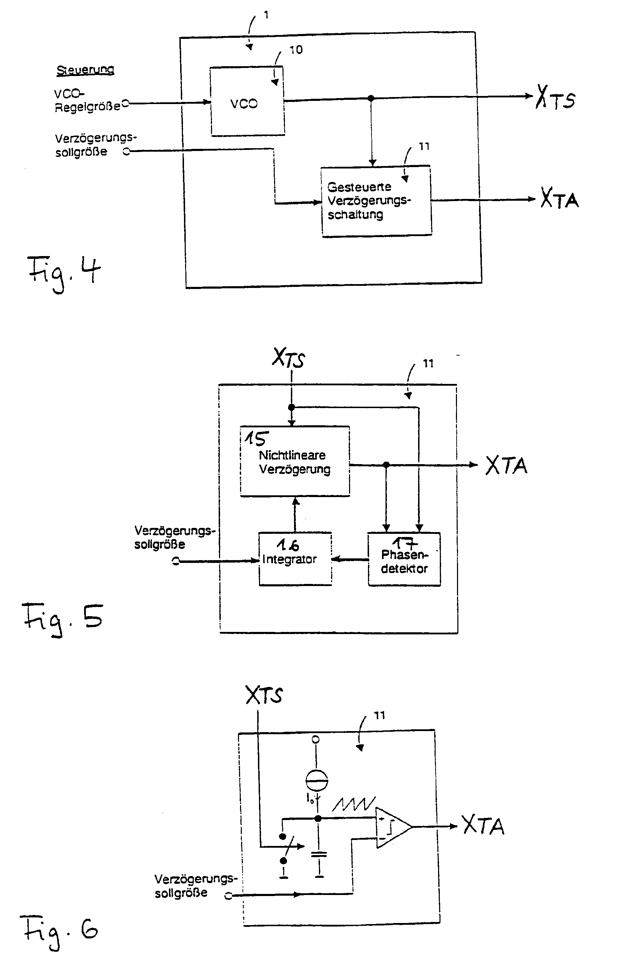

In Figur 1 ist der prinzipielle Aufbau eines TDR-Füllstandssensors mit verbesserter Störsicherheit zur beispielhaften Anwendung der Erfindung schematisch dargestellt. Kernstück des Sensors ist ein Wellenleiter 4, dessen oberes Ende den Prozeßanschluß 18 bildet, zum Beispiel ein Halteteil 18 ist, wobei der Wellenleiter 4 in ein Behältniss 12 ragt und teilweise in ein darin enthaltenes Medium 13 eintaucht, welches eine Oberfläche 14 und somit eine Grenzschicht 14 ausbildet. Ein Triggergenerator 1 dient zur Generierung eines Sende-Triggersignals XTS mit der Pulsrepetierfrequenz fprf und eines Abtast-Triggersignals XTA mit der Abtastfrequenz fA. Der Triggergenerator 1 wird von einer Steuereinheit 8 gesteuert. Beispiele für die nähere Ausgestaltung des Triggergenerators 1 sind in den Figuren 4-6 gezeigt und dort erläutert.

Das Sende-Triggersignal XTS wird einem Sendepulsgenerator 2 zugeführt, welcher dadurch zur Erzeugung von Sendepulsen Xs einer vorbestimmten Signalform und Amplitude mit der Pulsrepetierfrequenz fprf veranlaßt wird. Die Sendepulse Xs werden über ein Koppelnetzwerk 3 in den Wellenleiter 4 eingekoppelt. Sie breiten sich entlang dem Wellenleiter 4 aus und werden in Höhe der Grenzschicht 14 Medium-Luft teilweise reflektiert. Das rückreflektierte Signal Xsonde wird über das Koppelnetzwerk 3 einer Abtastschaltung 6 zugeführt. Das abgetastete Signal enthält somit Beiträge des ursprünglich gesendeten Pulses Xs und des reflektierten Pulses Xsonde bzw. Teile einer Referenzreflektion, falls eine Referenzreflektion verwendet wird, was ebenso möglich ist. Das abgetastete Signal ist schematisch im rechten Teil der Figur 1 längs der Sonde 14 zwischen Grenzschicht 14 und Halteteil 18 aufgetragen. Aus der Laufzeitdifferenz Δt zwischen den beiden Pulsen kann auf die Höhe der Grenzschicht 14 in Bezug zum Prozeßanschluß 18 geschlossen werden.

Um das kurze, mit der Pulsrepetierfrequenz fPRF wiederholte Sondensignal Xsonde auswertbar zu machen, wird es im Rahmen einer Bandpaßabtastung einer Abtastschaltung 6 zugeführt, in der es mit Abtastpulsen XA, die mit einer Frequenz fA von einem Abtastpulsgenerator 5 erzeugt werden, abgetastet wird. Die Abtastschaltung 6 ist so gewählt, daß sie ihr Abtastverhalten auch bei großen Störsignalpegeln nicht ändert und somit großsignalfest ist. Vorzugsweise kann eine 4-Dioden-Abtastschaltung zum Einsatz gelangen.

Der Abtastpulsgenerator 5 wird, wie der Sendepulsgenerator 2, vom Triggergenerator 1 mittels des Abtast-Triggersignals XTA mit der Abtastfrequenz fA. getriggert. Das abgetastete Signal wird in einer Filter- und Verstärkereinheit 7 gefiltert und verstärkt, die einen Tiefpaß zur Filterung aufweist, und sodann als Signal Xvideo bzw. als Reflexionsprofil der Steuereinheit 8 zur weiteren Auswertung zugeführt.

In der Steuereinheit 8 wird ein Störmaß durch Vergleich mit einem gespeicherten Referenzprofil ermittelt. Falls eine vorgegebene Störschwelle überschritten wird, wird an den Triggergenerator 1 ein Signal zur Anpassung der Pulsrepetierfrequenz gesendet. Sodann wird das Verfahren wie oben beschrieben durchgeführt.

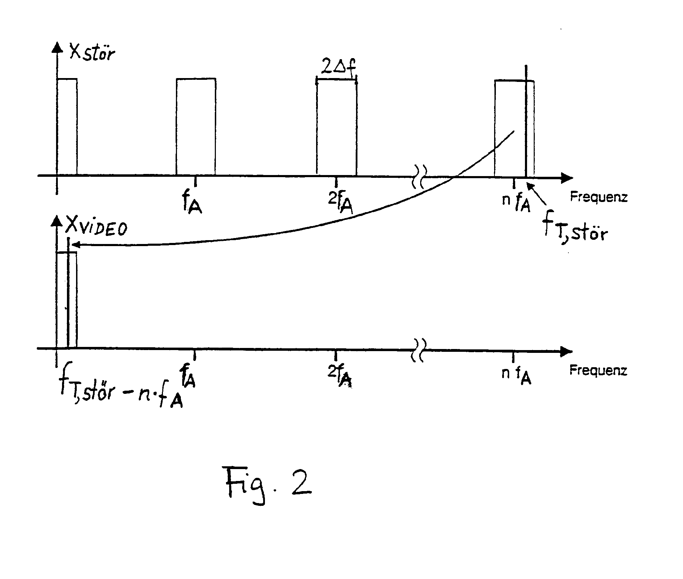

Figur 2 zeigt schematisch die Frequenzumsetzung durch die Bandpaßabtastung eines Störsignals Xstör der Frequenz fT.stör, aufgetragen über die Frequenz. Im oberen Teil der Figur 2 ist das schmalbandige Störsignal Xstör gezeigt; im unteren Teil ist das durch Abtastung aus Xstör entstehende niederfrequente Ausgangssignal Xvideo über der Frequenz abgebildet. Ganzzahlige Vielfache der Abtastfrequenz fA sind auf der Frequenzachse in beiden Teilen von Figur 2 markiert.

Figur 3 zeigt den prinzipiellen Amplituden-Verlauf eines Reflexionsprofils sowie des Reflexionsprofils mit einem überlagerten Störsignal als Funktion der Distanz d vom Prozeßanschluß 18 bis zur Grenzschicht 14. Das ungestörte Reflexionsprofil 19, welches in der Figur 3 dick gezogen ist, besteht zum einen aus einem Puls 20 an der Position d1, wobei der Puls 20 entweder ein Sendeimpuls bzw. ein Teil des Sendeimpulses selbst oder eine Referenzreflektion des Sendeimpulses sein kann, zum Beispiel am Übergang des Prozeßanschlusses des Halteteils 18 zur Sonde 4. Zum anderen besteht das ungestörte Reflexionsprofil 19 aus einem Puls 21 an der Position d2, der durch die Reflexion an der Grenzschicht 14 entsteht. Aus der Differenz d2-d1 läßt sich deshalb der Abstand des Ortes der Reflexion, das ist der Ort der Grenzschicht 14, vom Prozeßanschluß 18 ermitteln.

Das gestörte Signal 22, welches in Figur 3 dünn gezogen ist, entsteht aus der Überlagerung des ungestörten Profils mit einem schmalbandigen Störsignal, welches hier sinusförmig ohne Modulation, schematisch, dargestellt ist. Die Darstellung verdeutlicht, dass die Störsignalamplitude leicht in der Größenordnung oder darüber der Amplitude des reflektierten Pulses liegen kann. Es ist offensichtlich, dass dann die Bestimmung des Reflexionsortes des Sendeimpulses verfälscht oder sogar unmöglich wird.

Erfindungsgemäß wird daher die Störsignalamplitude im Ausgangssignal Xvideo durch Variation der Pulsrepetierfrequenz reduziert. Durch die Änderung der Pulsrepetierfrequenz fällt die Störung nicht mehr in ein Frequenzempfangsfenster und kann mit einem Tiefpaßfilter der Filter- und Verstärkereinheit 7, Figur 1, unterdrückt werden.

Figur 4 zeigt einen Triggergenerator 1 zur Generierung eines Sende-Triggersignals XTS mit variabler Pulsrepetierfrequenz und zur Generierung eines daran angepaßten Abtast-Triggersignals XTA. Ein Signal XTS mit der Pulsrepetierfrequenz fprf wird mit einem gesteuerten Oszillator CO 10, der ein spannungs- oder numerisch gesteuerter Oszillator sein kann, erzeugt. Ist der CO ein VCO, so ändert er seine Frequenz in Abhängigkeit von der Abstimmspannung, die VCO-Steuergröße, die als Eingangssignal am VCO anliegt und von der Steuereinheit 8, Figur 1, bestimmt und gesteuert wird. Somit kann der Zeitpunkt der Abtastung durch eine Verzögerungssollgröße eingestellt werden, beispielsweise mittels einer Rampenschaltung oder auch beliebig. Das bedeutet, dass die Verzögerung der Flanke des Triggersignals linear über die Zeit geändert werden kann, nämlich mittels des Rampenverfahrens oder die Verzögerung kann wahlfrei beliebig eingestellt werden.

Das vom VCO erzeugte Signal wird einerseits zur Triggerung des Sendepulses XTS herangezogen. Des weiteren wird es einer steuerbaren Verzögerungsschaltung 11 zugeführt. Diese erzeugt ein Ausgangssignal XTA, welches gegenüber dem Signal XTS eine definierte Verzögerung aufweist. Das Ausgangssignal XTA der Verzögerungsschaltung 11 hat somit gegenüber dem Signal XTS des VCO eine definierte Verzögerung bzw. einen definierten geringen Frequenzunterschied. Die Größe der Verzögerung wird durch eine Verzögerungs-Sollgröße geregelt, die von der Steuereinheit 8 bestimmt wird und als Eingangssignal an der Verzögerungsschaltung 11 anliegt.

In den Figuren 5 und 6 sind Beispiele zur Realisierung einer steuerbaren Verzögerungsschaltung 11 gemäß Figur 4 dargestellt.

In der Anordnung gemäß Figur 5 wird das vom Oszillator mit der Pulsrepetierfrequenz erzeugte Signal Xs bzw. XTS einer nichtlinearen Verzögerungsschaltung 15 zugeführt, wo es gegenüber dem Referenzsignal Xs bzw. XTS variabel verzögert wird. Die Verzögerungsschaltung 15 kann dabei aus einem RC-Netzwerk bestehen. Die Verzögerung wird dabei spannungsgesteuert eingestellt, hier über das Ausgangssignals eines Integrators 16, das wiederum von der extern vorgegebenen Verzögerungs-Sollgröße und vom Ausgangssignal eines Phasendetektors 17 bestimmt wird. Der Phasendetektor 17 bestimmt die Phasenlage des Referenzsignals zum verzögerten Signal und erzeugt ein Ausgangssignal, dessen Amplitude durch die Phasenlage gegeben ist. Durch die Verschaltung von Phasendetektor 17, Integrator 16 und Verzögerungsschaltung 15 wird ein Regelkreis gebildet, in welchem sich ein Gleichgewicht einstellt. Dabei wird eine Phasenverzögerung des verzögerten Signals XA bzw. XTA gegenüber dem Referenzsignal Xs bzw. XTS erzeugt, die von der Verzögerungs-Sollgröße linear abhängt.

Die Verzögerungs-Sollgröße kann dabei auch als digitaler Code eingegeben werden, der mit einem Digital-Analog-Konverter in ein analoges Steuersignal umgewandelt wird. Die Verzögerung des Abtast-Triggersignals läßt sich daher auf einfache Weise einstellen. Bei Veränderung der Pulsrepetierfrequenz wird das Abtastsignal somit einfach und unmittelbar gemäß der vorbestimmten und einmal eingestellten Verzögerungs-Sollgröße automatisch angepaßt, ohne daß eine manuelle Korrektur notwendig ist. Eine Möglichkeit für die Realisierung einer Schaltung gemäß Figur 5 ist in der US-Patentschrift 5 563 605 beschrieben. Figur 6 zeigt eine weitere Realisierungsmöglichkeit einer Verzögerungsschaltung 11. Das Referenzsignal Xs bzw. XTS veranlaßt einen Sägezahngenerator, hier schematisch dargestellt durch eine Stromquelle und einen Kondensator, zur Erzeugung einer Sägezahnspannung mit der Pulsrepetierfrequenz fprf. Diese wird auf einen Eingang eines Komparators gegeben. Der andere Eingang des Komparators wird mit einer zur Verzögerungs-Sollgröße proportionalen Spannung beaufschlagt. Das Ausgangssignal des Komparators weist somit gegenüber dem Referenzsignal XTS bzw. Xs eine Verzögerung, Phasenverschiebung, auf wobei die Verzögerung durch die Verzögerungs-Sollgröße bestimmt ist. Somit läßt sich auf einfache Weise ein Ausgangssignal XA bzw. XTA herstellen, das an Änderungen der Pulsrepetierfrequenz fprf automatisch angepaßt ist. Eine von verschiedenen Möglichkeiten für die Realisierung einer Schaltung gemäß Figur 6 ist in der DE 27 23 355 C2 beschrieben.

Alternativ zur steuerbaren Verzögerungsschaltung können die Frequenzen fPRF und fA auch durch zwei steuerbare Oszillatoren CO, mit Regelung erzeugt werden. Dazu wird ein schneller Regler innerhalb der Steuereinheit 8, Figur 1, für die Differenzfrequenz Δf benötigt. Ebenso kann eine Oszillatorbank zur Anwendung kommen mit Quarzoszillatoren für zwei bis drei unterschiedliche Frequenzen für die Frequenzen fPRF und fA. Von jeweils zwei Oszillatoren ist jeweils einer fest und der andere steuerbar.

### Gewerbliche Anwendbarkeit:

Die Erfindung läßt sich für Sensoren zur Füllstandsmessung auf der Basis von Zeitbereichsreflektometrie zur Erhöhung der elektromagnetischen Verträglichkeit gegenüber hochfrequenten Störfeldern und zur einfachen und kostengünstigen Erfüllung von EMV-Vorgaben vorteilhaft gewerblich einsetzen. Die Nützlichkeit der Erfindung besteht darin, dass durch Variation der Abtastfrequenz und/oder der Pulsrepetierfrequenz in vorteilhafter Weise Beiträge einer schmalbandigen Störung zum gemessenen Signal unterdrückt werden.

## Patentansprüche

1. Verfahren zur Erhöhung der Störfestigkeit eines Zeitbereichsreflektometers, insbesondere gegenüber Hochfrequenzeinstrahlung, bei welchem mit einer Pulsrepetierfrequenz (fprf) ein Sendepuls(Xₛ) erzeugt und in eine Wellenleitung (4) eingekoppelt wird, deren oberes Ende zum Prozessanschluss an einem Halteteil (18) angeordnet ist, wobei das von einem Reflektor (14), der mit der Wellenleitung (4) in Kontakt steht, rückreflektierte und auf der Wellenleitung (4) rücklaufende Signal (X_{sonde}) zur zeitgedehnten Darstellung als Reflexionsprofil mit Abtastpulsen (X_{A}), die mit einer Abtastfrequenz (fA) wiederholt werden, abgetastet wird und aus den Reflexionsprofilen laufend Messwerte gewonnen werden, die die Distanz vom Reflektor (14) zum Prozessanschluss beinhaltet, mit den folgenden Merkmalen:
I) die Abtastfrequenz (f_{A}) und die Pulsrepetierfrequenz (fprf) werden verändert, wobei entweder
II.1) die zeitgedehnte Darstellung des Reflexionsprofils unverändert bleibt oder
II.2) bei zeitlicher Veränderung des Reflexionsprofils die Änderung der Zeitdehnung bekannt ist und in der Auswertung des Reflexionsprofils berücksichtigt wird,
III)aus wenigstens einer Messung des Reflexionsprofils oder eines Teils desselben wird ein Störmaß bestimmt,
das Vertahren **dadurch gekennzeichnet, daß**
IV) zur Entscheidung über die Brauchbarkeit der Messwerte wird ein Algorithmus verwendet, der aus den Messwerten und dem Störmaß errechnet, ob das Reflexionsprofil so weit störungsfrei ist, dass eine ausreichende Messgenauigkeit erreicht wird und der Algorithmus aus folgenden Schritten besteht:.
V) falls das Störmaß eine vorbestimmte Schwelle übertrifft, werden die Abtastfrequenz (f_{A}) und die Pulsrepetierfrequenz (f_{prf}) geändert
VI) erneute Bestimmung und Bewertung des Störmaßes
VII) die Schritte V) und VI) werden wiederholt, bis das Störmaß die vorbestimmte Schwelle unterschreitet.

2. Verfahren nach Anspruch 1,
**dadurch gekennzeichnet,**
**dass** die Änderung der Abtastfrequenz (f_{A}) und der Pulsrepetierfrequenz (f_{prf}) anhand einer vorgegebenen Tabelle erfolgt, welche geeignete Frequenzen beeinhaltet, wobei der Zugriff auf die Inhalte der Tabelle linear oder zufällig ist.

3. Verfahren nach Anspruch 2,
**dadurch gekennzeichnet,**
**dass** zur Änderung der Abtast- (f_{A}) und der Pulsrepetierfrequenz (f_{prf}) die Frequenzen aus einem Frequenzbereich ausgewählt werden.

4. Verfahren nach einem der vorherigen Anspruch,
**dadurch gekennzeichnet,**
**dass** die Pulsrepetierfrequenz (f_{prf}) mittels eines spannungs- oder numerisch gesteuerten Oszillators (VCO oder NCO) verändert wird.

5. Verfahren nach Anspruch 4, **dadurch gekennzeichnet, dass** das Abtast-Triggersignal (X_{TA}) mittels einer steuerbaren Verzögerungsschaltung (11) aus dem Sende-Triggersignal (X_{TS}) gewonnen und der Verzögerungsschaltung (11) ein Referenzsignal (Xₛ) oder (X_{TS}) mit der Pufsrepetierfrequenz (f_{prf}) zugeführt wird und die Verzögerungsschaltung (11) ein Ausgangssignal (X_{A} bzw. X_{TA}) erzeugt, wobei die Verzögerung des Ausgangssignals (X_{A}, X_{TA}) durch eine vorgebbare Verzögerung-Sollgröße, mit welcher die Verzögerungsschaltung (11) gesteuert wird, bestimmt wird.

6. Verfahren nach einem der vorherigen Ansprüche,
**dadurch gekennzeichnet,**
**dass** das Störmaß gegeben ist durch einen Vergleich des durch die Reflexion an der Grenzschicht entstandenen Pulses mit einem vorgegebenen Referenzimpuls.

7. Verfahren nach einem der vorherigen Ansprüche,
**dadurch gekennzeichnet,**
**dass** das Störmaß gegeben ist durch die Differenz aus der maximalen und minimalen Abweichung des Reflexionsprofils von einem vorgegebenen Wert oder von dem Referenzprofil in einem vorbestimmten Zeit- oder Distanzfenster.

8. Verfahren nach Anspruch 1,
**dadurch gekennzeichnet,**
**dass** die Frequenz und/oder Phase der Abtastpulse (X_{A}) bei Veränderung der Pulsrepetierfrequenz (fprf) derart angepasst wird, dass die Differenz von Abtast- und Pulsrepetierfrequenz einen vorgegebenen Bereich nicht überschreitet oder konstant ist.

9. Schaltungsanordnung zur Durchführung des Verfahrens nach Anspruch 1,
**dadurch gekennzeichnet,**
**dass** dieselbe einen Triggergenerator (1) aufweist, welcher ein Sende-Triggersignal (X_{TS}) mit einer variablen, durch ein Steuersignal veränderbaren Pulsrepetierfrequenz (f_{prf}) und ein Abtast- Triggersignal (X_{TA}) mit gegenüber dem Sende-Triggersignal (X_{TS}) verschiedener Frequenz und/oder Phase erzeugt, wobei das Sende- bzw. Abtast-Triggersignal einen Sende- bzw. Abtastgenerator (2, 5) zur Erzeugung von Sende- bzw. Abtastpulsen veranlasst, mit einer Abtasteinheit (6), welche die von der Wellenleitung (4) rückgeleiteten Sendepulse (X_{Sonde}) zur zeitgedehnten Darstellung als Reflektionsprofil (X_{video}) abzutasten imstande ist, mit einer Filter- und Verstärkereinheit (7), welche die Störung unterdrückt und mit einer Steuereinheit (8), welche das Reflexionsprofil auszuwerten imstande ist und Steuersignale erzeugt, welche den Phasen- oder Frequenzunterschied der Triggersignale einstellen und mit welchen der Triggergenerator (1) zur Änderung der Pulsrepetierfrequenz (f_{prf}) veranlasst wird.

10. Schaltungsanordnung nach Anspruch 9,
**dadurch gekennzeichnet,**
**dass** der Triggergenerator (1) einen gesteuerten Oszillator (10, CO), der zum Beispiel spannungs- oder numerisch gesteuert ist (VCO oder NCO), umfasst, der mit der Pulsrepetierfrequenz (f_{prf}) schwingt.

11. Schaltungsanordnung nach Anspruch 9 oder 10,
**dadurch gekennzeichnet,**
**dass** der Triggergenerator (1) eine steuerbare Verzögerungsschaltung (11) umfasst, die mit dem Ausgangsignal des gesteuerten Oszillators (10, CO) beaufschlagt ist und deren Ausgangssignal das Abtast-Triggersignal (X_{TA}) darstellt.

12. Schaltungsanordnung nach Anspruch 10 oder 11,
**dadurch gekennzeichnet,**
**dass** der Triggergenerator (1) neben dem gesteuerten Oszillator (10, CO), der mit der Pulsrepetierfrequenz (f_{prf}) schwingt, einen weiteren gesteuerten Oszillator (CO) umfasst, der mit der Abtastfrequenz (f_{A}) schwingt, wobei gegebenenfalls die Differenz der Frequenzen mit einem Regler auf einen vorgegebenen Wert eingestellt und konstant gehalten wird.

13. Schaltungsanordnung nach Anspruch 12,
**dadurch gekennzeichnet,**
**dass** die Oszillatoren als Oszillatorbank ausgeführt sind zur Verfügungsstellung eines konstanten Frequenzunterschieds zwischen der Pulsrepetierfrequenz (f_{prf}) und der Abtastfrequenz (f_{A}).

## Claims

1. Method for increasing the interference immunity of a time domain reflectometer, particularly towards high-frequency radiation, where a transmission pulse (Xₛ) is generated at a pulse repetition frequency (f_{prf}) and is coupled to a wave guide (4) whose upper end towards the process connection is arranged on a retainer (18). The return signal (X_{sonde}) which is reflected back to the wave guide (4) by a reflector (14) that is connected to said wave guide (4) is scanned for time-expanded representation as a reflection profile with scan pulses (X_{A}) which are repeated at a scan frequency (fA) and measured values are continuously obtained from the reflection profiles, expressing the distance from the reflector (14) to the process connection with the following characteristics:
I) the scan frequency (f_{A}) and the pulse repetition frequency (f_{prf}) are changed, where either
II 1.) the time-expanded representation of the reflection profile remains unchanged or
II 2.) when a time change occurs in the reflection profile the change in the time expansion is known and taken into consideration in the evaluation of the reflection profile
III) an interference factor is determined from at least one measurement of the reflection profile or one part thereof
The method being **characterized in that**
IV) an algorithm is used to decide whether the measured values can be used, said algorithm using the measured values and the interference factor to determine whether the reflection profile is interference-free to such an extent that sufficient accuracy is achieved and where the algorithm comprises the following steps:
V) if the interference factor exceeds a predefined threshold, the scan frequency (f_{A}) and the pulse repetition frequency (f_{prf}) are changed
VI) the interference factor is redetermined and reassessed
VII) steps V) and VI) are repeated until the interference factor drops below the predefined threshold.

2. Method as per Claim 1
**characterized in that**
the change in the scan frequency (f_{A}) and the pulse repetition frequency (f_{prf}) takes place on the basis of a prespecified table which contains suitable frequency values, where access to the table content is linear or random.

3. Method as per Claim 2,
**characterized in that**
to change the scan frequency (f_{A}) and the pulse repetition frequency (f_{prf}), the frequencies are selected from a frequency range.

4. Method as per one of the previous claims,
**characterized in that**
the pulse repetition frequency (f_{prf}) is changed using a voltage controlled or numerically controlled oscillator (VCO or NCO).

5. Method as per Claim 4, **characterized in that** the scan trigger signal (X_{TA}) is obtained from the transmitter trigger signal (X_{TS}) using a controllable delay circuit (11), and a reference signal (X_{S}) or (X_{TS}) is sent to the delay circuit (11) at the pulse repetition frequency (f_{prf}) and the delay circuit (11) generates an output signal (X_{A} or X_{TA}), whereby the delay of the output signal (X_{A}, X_{TA}) is determined by a predefinable delay setpoint variable with which the delay circuit (11) is controlled.

6. Method as per one of the previous claims,
**characterized in that**
the interference factor is defined by comparing the pulse resulting from the reflection at the interface with a predefined reference pulse.

7. Method as per one of the previous claims,
**characterized in that**
the interference factor is defined by the difference between the maximum and minimum deviation of the reflection profile from a predefined value or from the reference profile in a predefined time and distance window.

8. Method as per Claim 1,
**characterized in that**
the frequency and/or phase of the scan pulses (X_{A}) is adapted when the pulse repetition frequency (f_{prf}) changes in such a way that the difference between the scan frequency and pulse repetition frequency (f_{prf}) does not exceed a predefined range or is constant.

9. Circuit arrangement to perform the method as per Claim 1,
**characterized in that**
this arrangement has a trigger generator (1) which generates a transmission trigger signal (X_{TS}) with a variable pulse repetition frequency (f_{prf}), which can be changed by a control signal, and a scan trigger signal (X_{TA}) with a different frequency and/or phase compared to the transmission trigger signal (X_{TS}), where the transmission or scan trigger signal causes a transmission or scan generator (2, 5) to generate transmission or scan pulses with a scan unit (6) which is capable of scanning the transmission pulses (X_{sonde}) redirected by the wave guide (4) for the time-expanded representation as a reflection profile (X_{video}) with a filter and amplifier unit (7) which suppresses the interference and with a control unit (8) which is capable of evaluating the reflection profile and generates control signals which set the phase difference or frequency difference of the trigger signals and with which the trigger generator (1) is triggered to change the pulse repetition frequency (f_{prf}).

10. Circuit arrangement as per Claim 9,
**characterized in that**
the trigger generator (1) comprises a controlled oscillator (10, CO) which is, for example, a voltage controlled or numerically controlled oscillator (VCO or NCO), which oscillates at the pulse repetition frequency (f_{prf}).

11. Circuit arrangement as per Claim 9 or 10,
**characterized in that**
the trigger generator (1) comprises a controllable delay circuit (11) which is supplied with the output signal of the controlled oscillator (10, CO) and whose output signal represents the scan trigger signal (X_{TA}).

12. Circuit arrangement as per Claim 10 or 11,
**characterized in that**
in addition to the controlled oscillator (10, CO) that oscillates at the pulse repetition frequency (f_{prf}), the trigger generator has another controlled oscillator (CO) which oscillates at the scan frequency (f_{A}), where the difference in the frequencies is set to a preset value with a controller and is kept constant.

13. Circuit arrangement as per Claim 12,
**characterized in that** the oscillators are designed as an oscillator bank for the provision of a constant difference in frequency between the pulse repetition frequency (f_{prf}) and the scan frequency (f_{A}).

## Revendications

1. Procédé destiné à l'amélioration de l'immunité aux parasites d'un réflectomètre temporel, notamment par rapport au rayonnement haute fréquence, pour lequel une impulsion d'émission (Xₛ) est générée à une fréquence de répétition d'impulsion (f_{prf}) et injectée dans un guide d'ondes (4), dont l'extrémité supérieure est disposée, pour le raccordement au process, sur une pièce de retenue (18), le signal (X_{sonde}) du réflecteur (14), qui est en contact avec le guide d'ondes (4), signal rétroréfléchi et redirigé à travers le guide d'ondes (4) en vue de la représentation allongée dans le temps en tant que profil de réflexion avec des impulsions de balayage (X_{A}), qui sont répétées à une fréquence d'échantillonnage (f_{A}), étant échantillonné et des valeurs mesurées étant acquises continuellement à partir des profils de réflexion, qui contiennent la distance du réflecteur (14) au raccord de process, avec les caractéristiques suivantes :
I) la fréquence d'échantillonnage (f_{A}) et la fréquence de répétition d'impulsion (f_{prf}) sont modifiées, et soit
II.1) la représentation allongée dans le temps du profil de réflexion reste inchangée soit
II.2) en cas de modification temporelle du profil de réflexion, le changement de l'allongement du temps est connu et est pris en compte lors de l'évaluation du profil de réflexion,
III) un degré d'interférence est déterminé à partir d'au moins une mesure du profil de réflexion ou d'une partie de ce même profil,
le procédé **caractérisé en ce**
IV) que, pour la décision concernant l'utilité des valeurs mesurées est utilisé un algorithme, qui calcule à partir des valeurs mesurées et du degré d'interférence, si le profil de réflexion est exempt d'interférence au point qu'une précision de mesure suffisante soit atteinte, et que l'algorithme se compose des étapes suivantes :
V) si le degré d'interférence dépasse un seuil prédéterminé, la fréquence d'échantillonnage (f_{A}) et la fréquence de répétition d'impulsion (f_{prf}) sont modifiées
VI) nouvelle détermination et évaluation du degré d'interférence
VII) les étapes V) et VI) sont répétées jusqu'à ce que le degré d'interférence parvienne sous le seuil prédéterminé.

2. Procédé selon la revendication 1,
**caractérisé en ce**
**que** la modification de la fréquence d'échantillonnage (f_{A}) et de la fréquence de répétition d'impulsion (f_{prf}) est réalisée au moyen d'une table prédéfinie, laquelle contient des fréquences appropriées, l'accès aux contenus de la table étant linéaire ou aléatoire.

3. Procédé selon la revendication 2,
**caractérisé en ce**
**que** pour la modification de la fréquence d'échantillonnage (f_{A}) et de répétition d'impulsion (f_{prf}), les fréquences sont sélectionnées à partir d'une gamme de fréquences.

4. Procédé selon l'une des revendications précédentes,
**caractérisé en ce**
**que** la fréquence de répétition d'impulsion (f_{prf}) est modifiée au moyen d'un oscillateur commandé en tension ou à commande numérique (VCO ou NCO).

5. Procédé selon la revendication 4,
**caractérisé en ce**
**que** le signal de déclenchement d'échantillonnage (X_{TA}) est acquis au moyen d'un circuit de temporisation (11) activable à partir du signal de déclenchement d'émission (X_{RS}), et en ce qu'un signal de référence (Xₛ) ou (X_{RS}) est injecté dans le circuit de temporisation (11) à la fréquence de répétition d'impulsion (f_{prf}) et le circuit de temporisation (11) génère un signal de sortie (X_{A} ou X_{TA}), la temporisation du signal de sortie (X_{A}, X_{TA}) étant déterminée par une grandeur théorique de temporisation prédéfinissable, avec laquelle le circuit de temporisation (11) est commandé.

6. Procédé selon l'une des revendications précédentes,
**caractérisé en ce**
**que** le degré d'interférence est défini par une comparaison de l'impulsion générée par la réflexion sur l'interface avec une impulsion de référence prédéfinie.

7. Procédé selon l'une des revendications précédentes,
**caractérisé en ce**
**que** la coté d'interférence est définie par la différence entre l'écart maximal et minimal du profil de réflexion et une valeur prédéfinie ou le profil de référence au sein d'une fenêtre de temps ou de distance prédéterminée.

8. Procédé selon la revendication 1,
**caractérisé en ce**
**que** la fréquence et/ou la phase de l'impulsion d'échantillonnage (X_{A}) en cas de modification de la fréquence de répétition d'impulsion (f_{prf}) est adaptée de telle manière que la différence entre la fréquence d'échantillonnage et la fréquence de répétition d'impulsion ne dépasse pas une zone prédéfinie ou est constante.

9. Configuration de circuit destinée à la réalisation du procédé selon la revendication 1,
**caractérisée en ce**
**que** cette même configuration comprend un générateur de déclenchement (1), lequel génère un signal de déclenchement d'émission (X_{RS}) avec une fréquence de répétition d'impulsion (f_{prf}) variable, modifiable par un signal de commande, et un signal de déclenchement d'échantillonnage (X_{TA}) avec une fréquence et/ou une phase différente par rapport au signal de déclenchement d'émission (X_{RS}), le signal de déclenchement d'émission ou d'échantillonnage chargeant un générateur d'émission ou d'échantillonnage (2, 5) de générer des impulsions d'émission ou d'échantillonnage, avec une unité d'échantillonnage (6), laquelle est en mesure d'échantillonner l'impulsion d'émission (X_{sonde}) redirigée à travers le guide d'ondes (4) en vue de la représentation allongée dans le temps en tant que profil de réflexion (X_{vidéo}), avec une unité de filtrage et d'amplification (7), qui élimine l'interférence et avec une unité de commande (8), qui est en mesure d'évaluer le profil de réflexion et génère des signaux de commande, lesquels règlent la différence de fréquence des signaux de déclenchement et avec lesquels le générateur de déclenchement (1) est chargé de la modification de la fréquence de répétition d'impulsion (f_{prf}).

10. Configuration de circuit selon la revendication 9,
**caractérisé en ce**
**que** le générateur de déclenchement (1) comprend un oscillateur commandé (10, CO), lequel est par exemple commandé en tension ou de façon numérique (VCO ou NCO), qui oscille à la fréquence de répétition d'impulsion (f_{prf}).

11. Configuration de circuit selon la revendication 9 ou 10,
**caractérisé en ce**
**que** le générateur de déclenchement (1) comprend un circuit de temporisation (11) activable, qui est alimenté avec le signal de sortie de l'oscillateur commandé (10, CO), et dont le signal de sortie représente le signal de déclenchement d'échantillonnage (X_{TA}).

12. Configuration de circuit selon la revendication 10 ou 11,
**caractérisé en ce**
**que** le générateur de déclenchement (1) comprend, outre l'oscillateur commandé (10, CO), qui oscille à la fréquence de répétition d'impulsion (f_{prf}), un autre oscillateur commandé (CO), qui oscille à la fréquence d'échantillonnage (f_{A}), la différence des fréquences étant, le cas échéant, réglée à une valeur prédéfinie et maintenue constante à l'aide d'un régulateur.

13. Configuration de circuit selon la revendication 12,
**caractérisé en ce**
**que** les oscillateurs sont conçus en tant que banque d'oscillateurs pour la mise à disposition d'une différence de fréquence constante entre la fréquence de répétition d'impulsion (f_{prf}) et la fréquence d'échantillonnage (f_{A}).
